Europäisches Patentamt

(19) European Patent Office

Office européen des brevets

(11) Numéro de publication: **0 023 055**
**B1**

(12) **FASCICULE DE BREVET EUROPEEN**

(45) Date de publication du fascicule du brevet: 09.11.83

(21) Numéro de dépôt: **80200639.5**

(22) Date de dépôt: **03.07.80**

(51) Int. Cl.³: **C 25 D  11/34,  F 24 J  3/02**

(54) **Procédé de fabrication d'un absorbeur sélectif de capteur solaire.**

(30) Priorité: **11.07.79 FR 7918414**

(43) Date de publication de la demande:
**28.01.81 Bulletin 81/4**

(45) Mention de la délivrance du brevet:
**09.11.83 Bulletin 83/45**

(84) Etats contractants désignés:
**DE GB**

(56) Documents cités:
**CH - A - 576 008**
**FR - A - 2 325 002**
**FR - A - 2 337 320**
**FR - A - 2 338 475**

(73) Titulaire: **ANVAR Agence Nationale de**
**Valorisation de la Recherche**
**13, rue Madeleine Michelis**
**F-92522 Neuilly-sur-Seine (FR)**

(72) Inventeur: **Aries, Lucien**
**38 les Bleuets Baziege**
**F-31450 Montgiscard (FR)**
Inventeur: **Traverse, Jean-Pierre**
**72 rue Fontaine des Cerdans**
**F-31520 Ramonville Saint Agne (FR)**

(74) Mandataire: **Barre, Philippe**
**Cabinet Barre-Gatti-Laforgue 93-95 rue des**
**Amidonniers**
**F-31069 Toulouse Cédex (FR)**

Courier Press, Leamington Spa, England.

## Procédé de fabrication d'un absorbeur sélectif de capteur solaire

L'invention concerne un procédé de fabrication d'un absorbeur sélectif de capteur solaire, permettant l'obtention d'une surface de captation des rayonnement solaires à facteur d'absorption élevé et à faible facteur d'émission; elle s'étend aux absorbeurs sélectifs de capteur solaire, obtenus.

On connait plusieurs types de procédés consistant à revêtir la surface de captation d'un absorbeur solaire, d'un dépôt noir en vue d'en augmenter le facteur d'absorption et, le cas échéant, d'en réduire le facteur d'émission. Un type de procédé couramment utilisé consiste à enduire la surface d'une peinture appropriée; ce procédé présente l'avantage d'être, en général, de mise en oeuvre peu onéreuse mais possède plusieurs inconvénients. En premier lieu, il conduit à une surface de captation peu ou non sélective, c'est-à-dire qui possède un facteur d'émission élevé, de sorte qu'une importante partie de l'énergie est perdue par rayonnement, essentiellement dans le domaine de l'infrarouge. En outre, ces revêtements de dégradant à température moyenne ou élevée au terme d'un certain temps d'utilisation.

Un autre type de procédé consiste à réaliser un dépôt cathodique d'oxydes de chrome, désigné par noir de chrome, sur la surface de captation, Le bain électrolytique est à base d'acide chromique et le dépôt s'effectue par une électrolyse classique qui conduit à une addition de matière sur la surface. L'inconvénient de ce type de procédé réside dans la complexité et le coût du processus de préparation de la surface de captation appelée à recevoir le revêtement de noir de chrome; en effet, il est nécessaire d'effectuer au préalable un nickelage de la surface pour obtenir une bonne adhérence de la couche de noir de chrome et une sélectivité satisfaisante. En outre, on observe pour les surfaces ainsi revêtues que le facteur d'absorption décroît à température moyenne ou élevée (à partir de 200°C).

Un autre type de procédé illustré par exemple par le brevet Français publié sous le n° FR—A—2325002 consiste à utiliser comme surface à traiter un acier inoxydable et à traiter chimiquement cette surface en la plongeant à chaud dans des bains complexes contenant des composés à base de chrome ou de plomb en vue de former un film d'oxydes.

Ce type de procédé présente l'inconvénient d'utiliser des bains coûteux et polluants et de conduire à des couches superficielles d'oxydes dont l'épaisseur doit être rigoureusement contrôlée pour obtenir un effet sélectif et dont la stabilité n'est pas assurée à température élevée.

Enfin, on connaît un procédé (brevet Suisse CH—A—576008) pour colorer une surface métallique grâce à une anodisation sous forte tension, en milieu très basique et à température élevée. On ignore si ces revêtements colorés possèdent des propriétés d'absorption sélective des rayonnements solaires; de plus l'utilisation de ces aciers colorés est prévue à température ordinaire pour obtenir un effet décoratif et leur stabilité à température élevée n'est pas assurée. Il est vraisemblable, compte-tenu des conditions de l'anodisation (basicité tension élevée, température élevée) que l'on obtient dans ce procédé des couches de nature comparable à celles obtenues par trempage, avec les mêmes inconvénients.

La présente invention se propose de remédier aus inconvénients des procédés connus, en permettant de réaliser des surfaces de captation bénéficiant d'un faible coût et d'une excellente sélectivité, et ce sans risque de dégradation desdites surfaces.

Un autre objectif est de réaliser des absorbeurs présentant une bonne résistance à la corrosion.

Un autre objectif est de réaliser un absorbeur apte à travailler dans un domaine de température élevée, sans réduction notable de la sélectivité.

A cet effet, le procédé de fabrication d'un absorbeur sélectif de capteur solaire conforme à l'invention, permettant d'obtenir une surface de captation à facteur d'absorption élevé et faible facteur d'émission consiste à réaliser ladite surface de captation en un alliage ferreux contenant un métal d'apport constitué par du chrome à l'état allié et à faire subir a cette surface une oxydation anodique dans un bain électrolytique acide contenant des substances électroactives à base de métalloïdes, la tension d'électrolyse entre l'anode constituée par la surface de captation de l'absorbeur et la cathode étant ajustée à une valeur telle que le potentiel de l'anode soit compris entre le potentiel de corrosion naturelle et le potentiel de passivation primaire de l'alliage ferreux formant ladite anode. Il est bien entendu que les potentiels de corrosion naturelle et potentiel de passivation primaire sont relatifs à l'alliage ferreux plongé dans le bain électrolytique concerné. Ces potentiels sont bien connus de l'homme de l'art et sont très faciles à mesurer; le potentiel de corrosion naturelle peut être obtenu pour chaque alliage plongé dans un milieu donné, à l'aide d'un voltmètre en mesurant la tension qui s'établit naturellement entre une électrode de référence et l'alliage, plongés dans le bain concerné.

Le potentiel de passivation primaire peut être obtenu en traçant au moyen d'un potentiostat la courbe intensité/potentiel de l'alliage ferreux dans le bain électrolytique (le rôle du potentiostat étant d'imposer à l'anode un potentiel variable par rapport à une électrode de référence); le potentiel de passivation primaire correspond au sommet du plc d'activité.

Les substances électroactives à base de

métalloïdes du bain peuvent être constituées par des ions de métalloïdes disposés directement dans le bain, notamment sous forme de sel ou encore libérés au cours de l'électrolyse à partir de substances minérales ou organiques contenues dans le bain.

Une telle oxydation anodique d'un alliage ferreux contenant du chrome à l'état allié conditionne une modification de la composition chimique à la superficie de la surface: celle-ci s'enrichit en chrome provenant du coeur du matériau et reçoit des composés de métalloïdes provenant du bain électrolytique, lesquels migrent à la superficie sur une épaisseur donnée. On constate que la surface acquiert une couleur noire et les expérimentations ont montré qu'elle bénéficiait à la fois d'un facteur d'absorption élevé et d'un faible facteur d'émission. La surface de captation obtenue ne comporte aucun dépôt surajouté, mais est transformée superficiellement à l'intérieur même du matériau sur une faible épaisseur de celui-ci; aucun problème d'adhérence ne se pose donc, cependant que la stabilité des composés formés écarte tout risque de dégradation.

Le procédé est peu onéreux du fait qu'il consomme peu d'énergie (tension et intensité relativement faibles de l'électrolyse), qu'il peut être mis en oeuvre à température ambiante, qu'il utilise des bains électrolytiques peu couteux, enfin qu'il n'exige aucun traitement préalable de la surface à l'exception évidemment des opérations habituelles de préparation d'une oxydation anodique; en particulier, on supprime le traitement préalable de nickelage nécessaire dans les procédés connus au noir de chrome.

En outre le bain acide (qui peut n'être que très légèrement acide) ne présente aucun caractère polluant gênant ce qui est essentiel en pratique.

Selon un mode de mise en oeuvre préféré, la surface de captation est choisie en acier inoxydable à base de fer et chrome; on peut avantageusement choisir un alliage de type courant à base de fer, chrome et nickel. On obtient ainsi une sélectivité améliorée grâce à un enrichissement superficiel en nickel provenant d'une migration vers la surface d'atomes de nickel de l'acier; de plus les qualités de l'acier inoxydable confèrent à l'absorbeur une bonne résistance à la corrosion.

Le type d'acier inoxydable choisi dans chaque application est fonction de la température de fonctionnement prévue pour l'absorbeur et du rapport de sélectivité désiré; dans le cas d'un fonctionnement à température élevée, on peut choisir un acier inoxydable à base de fer, chrome et nickel, contenant des additions essentiellement de cuivre, silicium, titane, molybdène ou nobium ou un mélange de ces métaux; la sélectivité et/ou la stabilité se trouvent notablement améliorées par ces additifs.

On a pu constater que la sélectivité et/ou la stabilité à température élevée étaient dans la plupart des cas meilleurs en utilisant des aciers à basse teneur de carbone (teneur pondérale de carbone inférieure ou égale à 0,03%).

En vue de maîtriser de façon précise les propriétés optiques de la surface de captation l'oxydation anodique est, de préférence, réalisée à potentiel d'électrodes contrôlé, en disposant une électrode de référence dans le bain et en ajustant la différence de potentiel entre l'anode et l'électrode de référence à une valeur de consigne très approximativement constante comprise entre le potentiel de corrosion et le potentiel de passivation précités. Ce contrôle permet d'ajuster de façon reproducible la profondeur de pénétration du ou des métalloïdes, la nature des composés formés et l'épaisseur de matériau intéressée par la migration des additifs à l'intérieur de l'alliage, paramètres dont découlent les propriétés optiques de la surface.

En particulier, la valeur de consigne susévoquée est réglée à une valeur voisine du potentiel de passivation primaire.

Selon une mode de réalisation donnant des bons résultats, les substances électroactives du bain sont des substances à base de soufre, notamment des sulfures. On observe dans ce cas un facteur d'absorption sensiblement plus élevé qu'avec d'autres métalloïdes et un facteur d'émission sensiblement plus faible. Ces résultats proviennent vraisemblablement de la formation en superficie de composés très favorables, à savoir sulfures de chromes, sulfures de nickel, oxy-sulfures de ces corps ou sulfures mixtes.

Dans le cas ci-dessus évoqué de substances électroactives à base de soufre, on obtient des conditions de mise en oeuvre particulièrement économiques en réalisant l'oxydation anodique durant un temps de traitement très approximativement compris entre 5 et 30 minutes dans un bain aqueux contenant, en poids, très approximativement entre 1% et 40% d'acide sulfurique et entre 0,005 et 0,05 gramme d'ions sulfures par litre.

On a pu constater que les conditions d'acidité étaient larges et sur le plan pratique, il suffit de prévoir un bain aqueux contenant au moins 0,01% d'acide pour conférer au dit bain une acidité permanente suffisante et au moins 0,001 gramme d'ions sulfures par litre pour éviter des durées de traitement trop importantes.

L'oxydation anodique peut être réalisée à température ambiante, en milieu convenablement agité.

L'alliage ferreux de la surface de captation peut se présenter aussi bien sous forme de tôle, tube ou autre élément épais, que de feuillard mince destiné à être rapporté sur un support.

L'invention s'étend à un absorbeur sélectif de capteur solaire fabriqué par le procédé ci-dessus décrit et comprenant une surface de captation noire, enrichie superficiellement en au moins un métal d'apport autre que le fer, en particulier du chrome, et contenant superficiellement un ou des métalloïdes, en particulier soufre et oxygène.

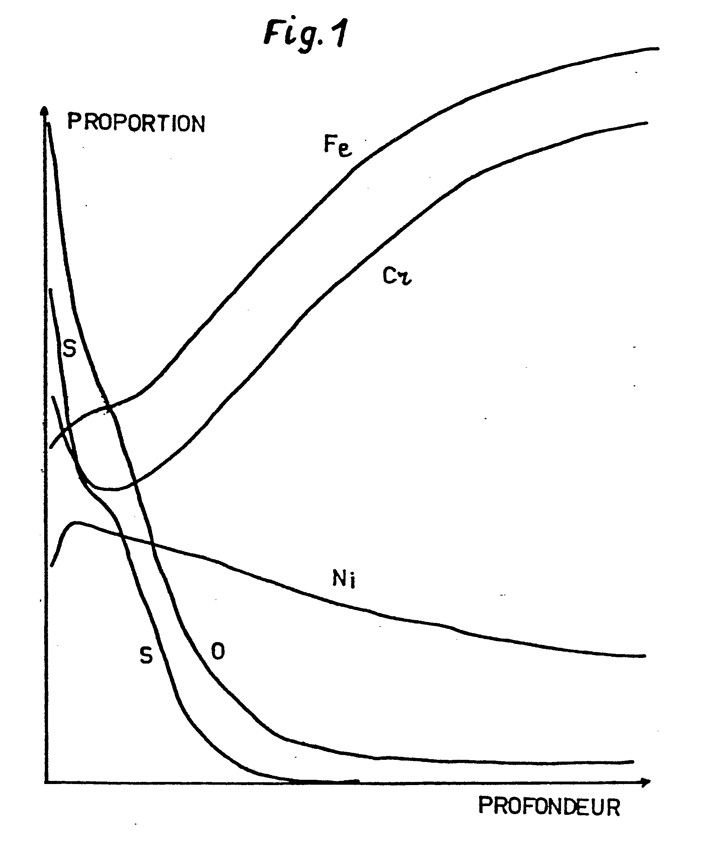

Le procédé de l'invention est illustré ci-après par plusieurs exemples de mise en oeuvre qui sont décrits en référence aux dessins; sur ces dessins, les figures 1, 2, 3 et 4 présentent des courbes donnant la proportion des éléments en surface du matériau en fonction de la profondeur, respectivement dans le cas des exemples 1, 2, 3 et 4.

Exemple 1

Dans cet exemple, l'absorbeur est réalisé en tôle d'acier inoxydable Z03CN18—10 (norme AFNOR) (composition: 18% de chrome, 10% de nickel, taux de carbone: 0,03%, le pourcentage restant étant du fer).

Le bain électrolytique est une solution aqueuse d'acide sulfurique à 38% en poids d'acide, additionné de 0,013 gramme de soufre par litre, sous forme de sulfure de sodium hydraté, Na2 S, 9H2 O.

Dans ce bain, le potentiel de corrosion de l'acier précité est de —0,45 volt et le potentiel de passivation —0,17 volt en prenant une électrode au calomel comme électrode de référence.

La cathode est en acier inoxydable de même type que l'anode qui est formée par la tôle de l'absorbeur; celui-ci est de façon classique recouvert d'une protection sur toutes les surfaces autres que la surface de captation appelée à être soumise au rayonnement solaire.

Une électrode de référence au calomel saturé est plongée dans le bain.

Les caractéristiques du traitement ont été les suivantes:

. durée: 15 minutes,
. potentiel de traitement (par rapport à l'électrode de référence): —0,18 volt,
. température du bain: 20°C.

Après traitement, on obtient une surface d'aspect noir mat dont le facteur d'absorption $\alpha_s$ (pourcentage global du rayonnement absorbé par rapport au rayonnement incident) et le facteur d'émission $\varepsilon_{20}$ à 20° (pourcentage global du rayonnement émis par rapport à celui du corps noir à la même température) ont été mesurés:

$$\alpha_s = 0,90$$
$$\varepsilon_{20} = 0,23.$$

Ces valeurs démontrent une bonne sélectivité avec un coefficient d'absorption élevé.

Un essai de vieillissement à 200°C a ensuite été mené sur l'absorbeur pendant 7000 heures. Au terme de cette période on constate que le facteur $\alpha_s$ sensiblement augmenté jusqu'à 0,93 et que le facteur d'émission a légèrement diminué jusqu'à 0,21.

De façon inattendue, la sélectivité s'est donc améliorée au cours du temps.

Après l'oxydation anodique, une micro-analyse a la sonde ionique a été réalisée sur un échantillon de la surface de captation; les courbes de la figure 1 sont les enregistrements obtenus et illustrent les profils de concentration des éléments (notons qu'il n'est pas possible, de façon simple, d'étalonner les axes de coordonnée).

On constate que la surface contient superficiellement du soufre et de l'oxygène en concentration croissante lorsqu'on se rapproche de la surface. De plus, on constate un enrichissement de la surface de nickel et en chrome. Pour le chrome, est enrichissement semble provenir d'une simple migration compte tenu du creux de concentration constaté dans une zone intermédiaire située entre la zone superficielle et la zone interne. Pour le nickel, on n'observe pas le creux susévoqué et l'enrichissement peut vraisemblablement s'expliquer par une dissolution d'une très faible épaisseur de matériau dans le bain suivie d'une diffusion du nickel en surface du matériau.

Exemple 2

Cet exemple a été conduit en utilisant pour l'absorbeur l'acier inoxydable Z 12 C L 25—20 (norme AFNOR) (composition: 25% de chrome, 20% de nickel, taux de carbone: 0,12%, présence de traces de silicium <1%, reliquat constitué par du fer).

Le bain électrolytique est une solution aqueuse d'acide sulfurique à 38% en poids d'acide, additionné de 0,027 gramme de soufre par litre, sous forme de sulfure de sodium hydraté.

Dans ce bain le potentiel de corrosion est —0,40 volt et le potentiel de passivation —0,02 volt.

Les caractéristiques de traitement ont été les suivantes:

. durée: 10 minutes,
. potentiel de traitement: —0,05 volt,
. température: 20°C.

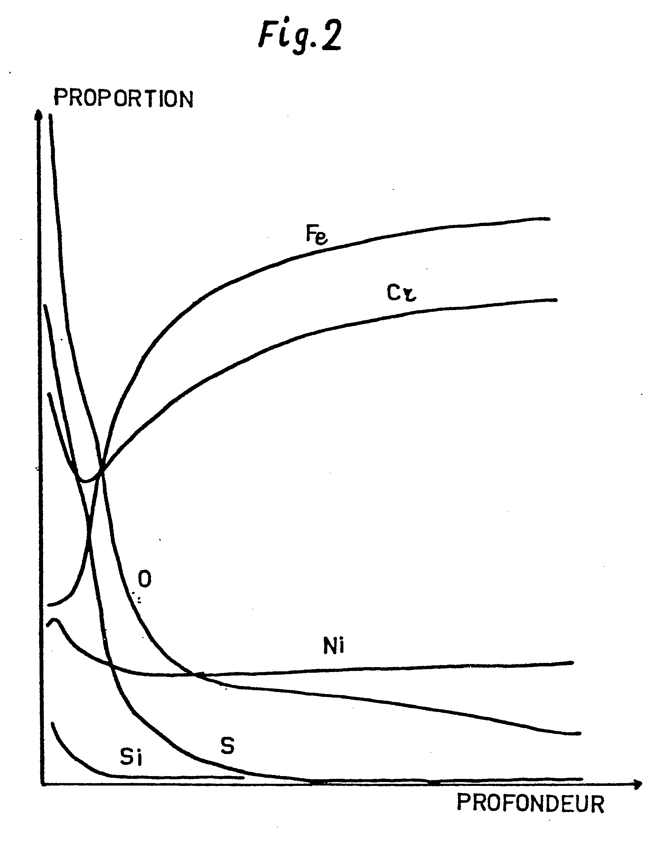

Les courbes obtenues par micro-analyse ionique sont reproduites à la figure 2. On constate un enrichissement de la surface en silicium et une sélectivité accrue ($\alpha_s$=0,88 $\varepsilon_{20}$=0,22).

Exemple 3

Cet exemple a été conduit avec un bain analogue au précédent en utilisant pour l'absorbeur l'acier inoxydable Z 06 CNUD 15—04 (norme AFNOR (15% de chrome, 4% de nickel, 2% de cuivre, 2% de molybdène, 0,06% de carbone, le reste étant du fer).

Le potentiel de corrosion est —0,41 volt et le potentiel de passivation —0,18 volt.

Les caractéristiques de traitement ont été les suivantes:

. durée: 10 minutes,
. potentiel de traitement: 0,19 volt,
. température: 20°C.

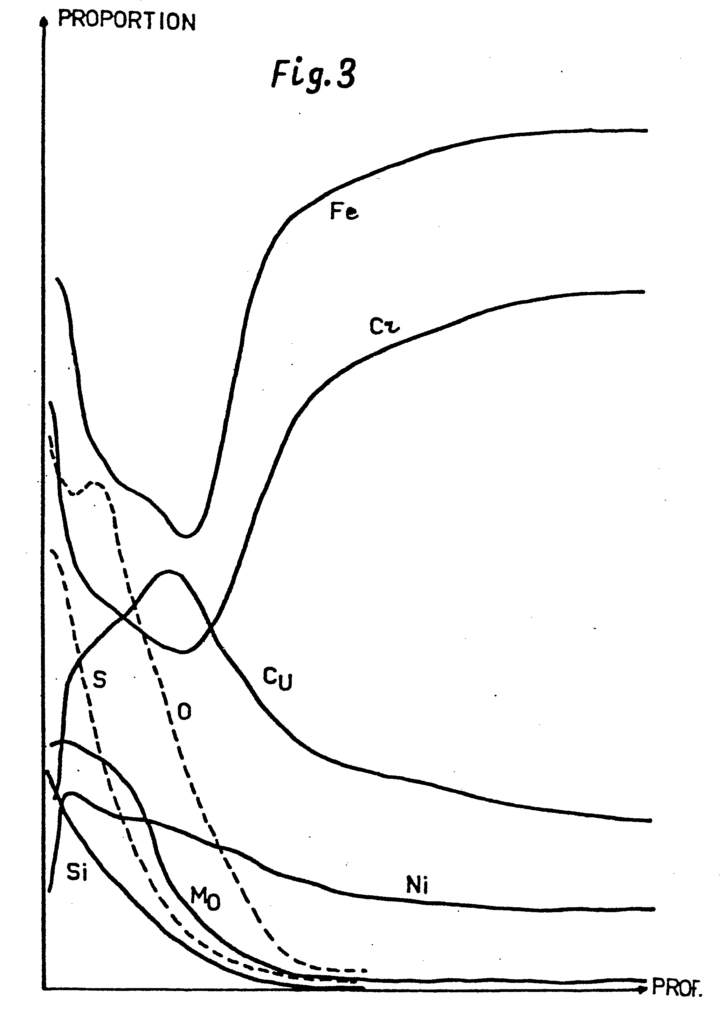

Les courbes obtenues sont reproduites à la figure 3; la concentration en cuivre présente un pic en surface, cependant, que la concentration en molybdène est croissante lorsqu'on s'approche de la surface.

Cet exemple a conduit à une surface de captation possédant une excellente sélectivité ($\alpha_s$=0,90, $\varepsilon_{20}$=0,17); toutefois, l'acier inoxydable de départ est plus onéreux que les précédents.

Exemple 4

Dans cet exemple, la surface de captation est réalisée en feuillard d'épaisseur de 2/100e mm en acier inoxydable Z 10 CNU 18—10 (composition: 18% de chrome, 10% de nickel, 1 à 2% de cuivre, trace de silicium, le pourcentage restant étant du fer).

Le bain électrolytique est une solution aqueuse d'acide sulfurique à 25% en poids d'acide, additionné 0,02 gramme de soufre par litre, sous forme de sulfure de sodium hydraté.

Le potentiel de corrosion de cet acier est —0,42 volt et le potentiel de passivation —0,10 volt.

La cathode est en acier inoxydable de même type que l'anode et l'électrode de référence est au calomel saturé.

Les caractéristiques de traitement ont été les suivantes:

. durée: 10 minutes,
. potentiel de traitement: —0,18 volt,
. température: 20°C.

Après traitement, on obtient les valeurs suivantes pour les facteurs d'absorption et d'émission:

— $\alpha_s$=0,83,
— $\varepsilon_{20}$=0,15.

Le facteur d'émission est donc très faible dans ce cas.

Un essai de vieillissement à 300°C a été réalisé pendant 1000 heures. On constate une augmentation notable de $\alpha_s$ qui devient égal à 0,90, le facteur d'émission $\varepsilon_{20}$ ayant légèrement augmenté (0,17).

Après cet assai de vieillissement, la sélectivité de cette surface de captation est donc remarquable.

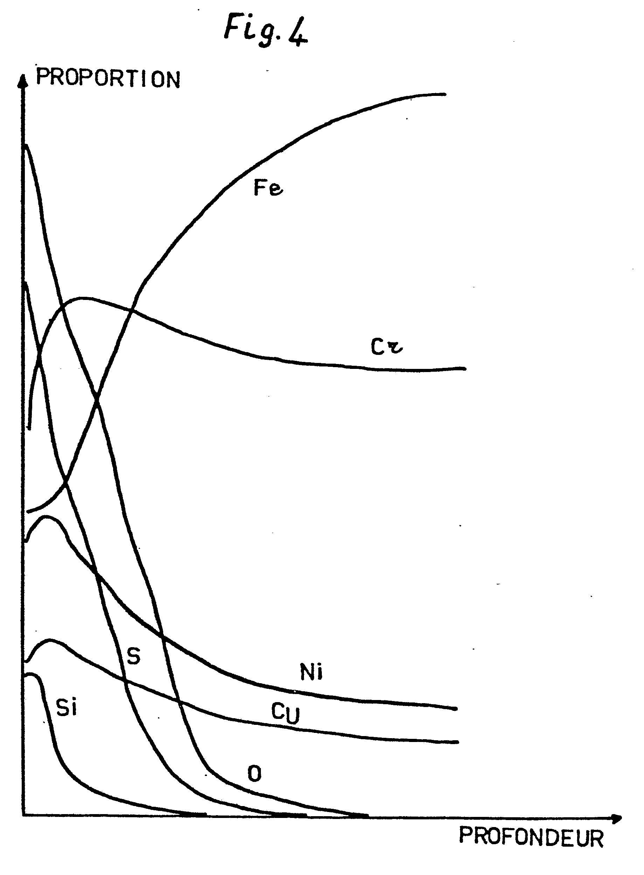

Les courbes obtenues par micro-analyse ionique sont reproduites à la figure 4.

**Revendications**

1. Procédé de fabrication d'un absorbeur sélectif de capteur solaire, permettant l'obtention d'une surface de captation des rayonnements solaires à facteur d'absorption élevé et à faible facteur d'émission, ledit procédé étant caractérisé en ce qu'on réalise la surface de captation de l'absorbeur en un alliage ferreux contenant un métal d'apport constitué par du chrome à l'état allié et en ce que l'on fait subir à ladite surface une oxydation anodique dans un bain électrolytique acide contenant des substances électroactives à base de métalloïdes, la tension d'électrolyse entre l'anode constituée par la surface de captation de l'absorbeur et la cathode étant ajustée à une valeur telle que le potentiel de l'anode soit compris entre le potentiel de corrosion naturelle et le potentiel de passivation primaire de l'alliage ferreux formant ladite anode.

2. Procédé de fabrication selon la revendication 1, dans lequel la surface de captation est réalisée en acier inoxydable contenant du chrome.

3. Procédé de fabrication selon la revendication 2, dans lequel la surface de captation est réalisée en acier inoxydable à base de fer, chrome et nickel.

4. Procédé de fabrication selon l'une des revendications 2 ou 3, caractérisé en ce que la surface de captation est réalisée en un acier inoxydable contenant également un ou plusieurs métaux du groupe: cuivre, silicium, titane, molybdène ou nobium.

5. Procédé de fabrication selon l'une des revendications 1 ou 2, caractérisé en ce que la surface de captation est réalisée en un alliage ferreux à basse teneur en carbone.

6. Procédé de fabrication selon l'une des revendications 1, 2, 3, 4 ou 5, caractérisé en ce que l'oxydation anodique de la surface de captation est effectuée à potentiel d'électrode contrôlé, en disposant une électrode de référence dans le bain électrolytique et en ajustant la différence de potentiel entre l'anode et l'électrode de référence à une une valeur de consigne très approximativement constante comprise entre le potentiel de corrosion naturelle de l'alliage ferreux et le potentiel de passivation primaire de celui-ci.

7. Procédé de fabrication selon la revendication 6, caractérisé en ce que la valeur de consigne de la différence de potentiel est ajustée à une valeur voisine du potentiel de passivation primaire de l'alliage ferreux.

8. Procédé de fabrication selon l'une des revendications 1, 2, 3, 4, 5, 6 ou 7, dans lequel l'oxydation anodique est réalisée dans un bain électrolytique contenant des substances électroactives à base de soufre, en particulier des sulfures.

9. Procédé de fabrication selon la revendication 8, caractérisé en ce que l'oxydation anodique est réalisée dans un bain aqueux contenant en poids au moins 0,01% d'acide et au moins 0,001 gramme d'ions sulfures par litre.

10. Procédé de fabrication selon la revendication 9, caractérisé en ce que l'oxydation anodique est réalisée durant un temps de traitement très approximativement compris entre 5 et 30 minutes dans un bain aqueux contenant en poids très approximativement entre 1% et 40% d'acide sulfurique et entre 0,005 et 0,05 gramme d'ions sulfures par litre.

**Patentansprüche**

1. Verfahren zur Herstellung eines selektiven Absorbers für Solarkollektor, welches die Bildung einer Solarstrahlung-Sammelfläche mit hohem Absorptionsfaktor und niedrigem Emissionsfaktor ermöglicht, wobei besagtes Verfahren dadurch gekennzeichnet ist, dass man die Sammelfläche des Absorbers aus einer ein aus Chrom im legierten Zustand bestehendes Zusatzmetall enthaltenden Ferro-Legierung fertigt und dass man besagte Oberfläche einer anodischen Oxydierung in einem sauren Elektrolysebad unterzieht, welches metalloidbasierte elektroaktive Stoffe enthält, und wobei die Elektrolysenspannung zwischen der durch die Sammelfläche des Absorbers gebildeten Anode und der Kathode auf solch einen Wert eingestellt wird, dass die Anodenspannung zwischen der natürlichen Korrosionsspannung und der primären Passivierungsspannung der besagte Anode bildenden Ferro-Legierung liegt.

2. Herstellungsverfahren nach Anspruch 1, bei welchem die Sammelfläche aus chromhaltigem rostfreien Stahl gefertigt wird.

3. Herstellungsverfahren nach Anspruch 2, bei welchem die Sammelfläche aus rostfreiem Stahl auf der Grundlage von Eisen, Chrom und Nickel gefertigt wird.

4. Herstellungsverfahren nach einem der Ansprüche 2 oder 3, dadurch gekennzeichnet, dass die Sammelfläche aus einem noch ein oder mehrere Metalle der Gruppe: Kupfer, Silicium, Titan, Molybdän oder Niob enthaltenden rostfreien Stahl gefertigt wird.

5. Herstellungsverfahren nach einem der Ansprüche 1 oder 2, dadurch gekennzeichnet, dass die Sammelfläche aus einer Ferro-Legierung mit niedrigem Kohlenstoffgehalt gefertigt wird.

6. Herstellungsverfahren nach einem der Ansprüche 1, 2, 3, 4 oder 5, dadurch gekennzeichnet, dass die anodische Oxydierung der Sammelfläche bei gesteuerter Elektrodenspannung vorgenommen wird, dadurch dass man eine Bezugselektrode in das Elektrolysebad bringt und den Spannungsunterschied zwischen der Anode und der Bezugselektrode auf einen ganz annähernd konstanten, zwischen der natürlichen Korrosionsspannung der Ferro-Legierung un der primären Passivierungsspannung derselben liegenden Sollwert einstellt.

7. Herstellungsverfahren nach Anspruch 6, dadurch gekennzeichnet, dass der Sollwert des Spannungsunterschieds auf einen in der Nähe der primären Passivierungsspannung der Ferro-Legierung liegenden Wert eingestellt wird.

8. Herstellungsverfahren nach einem der Ansprüche 1, 2, 3, 4, 5, 6 oder 7, bei welchem man die anodische Oxydierung in einem schwefel-basierte elektroaktive Stoffe, insbesondere Sulfide enthaltenden Elektrolysebad vornimmt.

9. Herstellungsverfahren nach Anspruch 8, dadurch gekennzeichnet, dass man die anodische Oxydierung in einem mindestens 0,01 Gew.-% Säure und mindestens 0,001 Gramm Sulfidionen pro Liter enthaltenden wässrigen Bad vornimmt.

10. Herstellungsverfahren nach Anspruch 9, dadurch gekennzeichnet, dass man die anodische Oxydierung während einer ganz annähernd zwischen 5 und 30 Minuten liegenden Behandlungszeit in einem ganz annähernd zwischen 1 Gew.-% und 40 Gew.-% Schwefelsäure und zwischen 0,005 und 0,05 Gramm Sulfidionen pro Liter enthaltenden wässrigen Bad vornimmt.

**Claims**

1. Process for making a selective absorber for a solar collector, enabling a surface for the collection of solar radiations to be obtained, which has a high absorption rate and a low emission rate, said process being characterised in that the collecting surface of the absorber is produced from a ferrous alloy which contains an addition metal, consisting of chromium in the alloyed state, and that said surface is made to undergo an anodic oxidation in an acidic electrolytic bath, containing metalloid-based electro-active substances, the electrolysis potential between the anode, composed of the collecting surface of the absorber, and the cathode being adjusted to a value such that the anode potential lies between the natural corrosion potential and the primary passivation potential of the ferrous alloy, forming said anode.

2. Manufacturing process according to Claim 1, in which the collecting surface is produced from chromium-containing stainless steel.

3. Manufacturing process according to Claim 2, in which the collecting surface is produced from stainless steel, based on iron, chromium and nickel.

4. Manufacturing process according to either Claim 2 or 3, characterised in that the collecting surface is produced from a stainless steel, which also contains one or more metals of the group: copper, silicon, titanium, molybdenum or niobium.

5. Manufacturing process according to either Claim 1 or 2, characterised in that the collecting surface is produced from a ferrous alloy having a low carbon content.

6. Manufacturing process according to one of the Claims 1, 2, 3, 4 or 5, characterised in that the anodic oxidation of the collecting

**0 023 055**

surface is effected at a controlled electrode potential, by placing a reference electrode into the electrolytic bath and adjusting the potential difference between the anode and the reference electrode to a very approximately constant set value, lying between the natural corrosion potential of the ferrous alloy and the primary passivation potential of the latter.

7. Manufacturing process according to Claim 6, characterised in that the set value for the potential difference is adjusted to a value close to the primary passivation potential of the ferrous alloy.

8. Manufacturing process according to one of the Claims 1, 2, 3, 4, 5, 6 or 7, in which the anodic oxidation is carried out in an electrolytic bath containing sulphur-based electro-active substances, particularly sulphides.

9. Manufacturing process according to Claim 8, characterised in that the anodic oxidation is carried out in an aqueous bath containing at least 0.01% by weight of acid and at least 0.001 gram of sulphide ions per litre.

10. Manufacturing process according to Claim 9, characterised in that the anodic oxidation is carried out for a treatment period which lies, very approximately, between 5 and 30 minutes in an aqueous bath containing, very approximately, between 1% and 40% by weight of sulphuric acid and between 0.005 and 0.05 gram of sulphide ions per litre.

# Fig.1

Fig.2

Fig.3

Fig. 4